# FASCICULE DE BREVET EUROPEEN

(11) **EP 3 239 731 B1**
(45) Date de publication et mention de la délivrance du brevet: **08.01.2020**
(21) Numéro de dépôt: 17167305.6
(22) Date de dépôt: 20.04.2017
(51) Int. Cl.: G01S 7/02

(54) **PROCÉDÉ DE POST-TRAITEMENT DE SIGNAUX RADARS À FAIBLE PUISSANCE D'ÉMISSION**
VERFAHREN ZUR NACHBEHANDLUNG VON RADARSIGNALEN MIT SCHWACHER EMISSIONSLEISTUNG
METHOD FOR POST-PROCESSING RADAR SIGNALS WITH LOW TRANSMISSION POWER

(30) Priorité: 25.04.2016 FR 1653648
(43) Date de publication de la demande: 01.11.2017
(73) Titulaire: Avantix, 13794 Aix-en-Provence (FR)
(72) Inventeur: FRECOURT, Nicolas, 13240 SEPTEMES LES VALLONS (FR)
(74) Mandataire: Debay, Damien

(56) Documents cités:
- US-A- 5 063 385
- US-A- 5 381 150
- US-A- 6 021 269
- DANIEL L. STEVENS ET AL: "Analysis of Low Probability of Intercept Radar Signals Using the Reassignment Method", AMERICAN JOURNAL OF ENGINEERING AND APPLIED SCIENCES, vol. 8, no. 1, 1 janvier 2015 (2015-01-01) , pages 26-47, XP055337578, ISSN: 1941-7020, DOI: 10.3844/ajeassp.2015.26.47
- STEVENS DANIEL ET AL: "A Novel Approach for the Characterization of FSK Low Probability of Intercept Radar Signals via Application of the Reassignment Method", 2014 IEEE MILITARY COMMUNICATIONS CONFERENCE, IEEE, 6 octobre 2014 (2014-10-06), pages 783-787, XP032686452, DOI: 10.1109/MILCOM.2014.136

## Description

### DOMAINE TECHNIQUE DE L'INVENTION

La présente invention se rapporte au domaine de la détection et du traitement de signal et/ou d'image, plus spécifiquement l'invention concerne un procédé de post-traitement de signaux radars à faible puissance d'émission, en particulier un radar de type LPI (Low Probability Interception).

### ARRIERE-PLAN TECHNOLOGIQUE DE L'INVENTION

Le traitement de signaux, en particulier ceux émis par un radar, rassemble les techniques de traitement, d'analyse et d'interprétation des signaux. Une bonne interprétation des signaux émis par un radar dépend, cependant, de la qualité des signaux captés par un intercepteur et des procédés de traitement. Le principe de l'interception radar est de travailler sur les signaux dont la puissance est suffisamment grande pour détecter un signal de manière certaine et ainsi d'éviter les fausses détections; c'est-à-dire avec un rapport signal à bruit (RSB) important. Les signaux émis par les radars classiques possèdent en général une grande puissance d'émission, et sont ainsi, interceptés et traités à l'aide des méthodes de traitement de signal classiques, et ce avec une assez bonne précision.

Néanmoins, lorsque le signal est émis par un radar à faible puissance d'émission, par exemple un radar de type LPI (Low Probability Interception), l'intercepteur ou les systèmes d'écoute enregistrent un signal avec un RSB très faible, qui ne peut pas être traité et/ou exploité avec les méthodes de traitement classiques, rendant le radar invisible aux yeux de l'intercepteur ou des systèmes d'écoute. Ainsi, La détection de signaux radar à faible puissance d'émission s'avère être un enjeu stratégique et technologique majeur, en particulier dans le domaine militaire ou sécuritaire pour lutter contre d'éventuelles menaces, et requiert ainsi de nouveaux principes ou procédés de traitement de ces signaux à faibles puissances. Le document US6021269 décrit un procédé de détection de signaux émis par un émetteur et ainsi que la génération de spectres et d'image à partir d'un traitement FFT.

### DESCRIPTION GENERALE DE L'INVENTION

La présente invention a pour but de pallier certains inconvénients de l'art antérieur en proposant la capacité de traiter des informations contenues dans les signaux radars et en particulier les signaux émis par des radars à faible puissance d'émission.

Ce but est atteint par un procédé de post-traitement de signaux radars à faible puissance d'émission, en particulier pour des radars de type LPI (Low Probability of Interception) comprenant:
- une première étape (E1) de numérisation du signal analogique émis par le radar et enregistré par un dispositif intercepteur;
- une seconde étape (E2) de génération de spectres et d'au moins une image, à partir du signal numérisé obtenu dans la première étape (E1), via un traitement FFT (Fast Fourier Transform) se focalisant sur les signaux de faible puissance et à l'enregistrement des spectres dans une image représentant sur trois axes, la fréquence sur l'axe des ordonnées, le temps sur l'axe des abscisses et la puissance du signal reçu;
- une troisième étape (E3) de traitement de l'image obtenue dans la seconde étape (E2), de génération de spectre et d'image;
- une quatrième étape (E4) de mesure de segments de l'image issue de l'étape (E3) de traitement d'image, à partir du nombre de pixels blancs contigus selon l'axe des abscisses;
- une cinquième étape (E5) de suppression des segments, à faible densité de pixels, obtenus dans la quatrième étape de mesure, les segments à forte densité de pixels étant qualifiés de détections par comparaison à une durée minimale déterminée et mémorisée;
- et une sixième étape (E6) de conversion en mégahertz et milliseconde de la détection du signal pixélisée par une déviation en fréquence selon l'axe des ordonnées et par une durée selon l'axe des abscisses, obtenue dans l'étape (E5) de suppression, pour lecture et interprétation.

Selon une autre particularité, troisième étape (E3), de traitement de l'image obtenue dans la deuxième étape (E2), comprend au moins une sous-étape (E31) de détection des contours de l'image issue de l'étape (E2), une sous-étape (E32) de seuillage de l'image traitée dans l'étape (E31) de détection des contours de l'image pour mettre en exergue les segments détectés et réduire le bruit, une sous-étape (E33) de dilatation de l'image traitée dans l'étape (E32) de seuillage de l'image pour combler les discontinuités des segments, et une sous-étape (E34) de regroupement des détections obtenues dans l'étape (E33) de dilatation de l'image.

Selon une autre particularité, la sous-étape (E31) de détection des contours de l'image consiste à accentuer les contours du signal en se basant sur le gradient d'intensité lumineuse, et à isoler le signal recherché du bruit.

Selon une autre particularité, l'image est traitée par un filtre de Prewitt.

Selon une autre particularité, la sous-étape (E32) de seuillage de l'image consiste à passer d'une image en nuance de gris à une image noir et blanc constituée d'information binaire.

Selon une autre particularité, le seuillage est effectué selon la méthode de Yen.

Selon une autre particularité, la sous-étape (E33) de dilatation de l'image consiste à combler les discontinuités des détections et de remplir l'intérieur des contours du signal d'intérêt par des pixels blancs.

Selon une autre particularité, la sous-étape (E34) de regroupement des détections consiste à regrouper par paquets contigus (à une tolérance près) les points blancs correspondant à une potentielle détection.

Selon une autre particularité, les points blancs sont regroupés en segments de différentes tailles.

Selon une autre particularité, l'étape (E4) de mesure des segments de l'image formés de pixels blancs contigus, consiste à sélectionner les segments suivant l'axe des abscisses et correspondant physiquement à une émission d'une onde radar d'une durée supérieure à environ 0.5 milliseconde.

Selon une autre particularité, le procédé de post-traitement des signaux radars est mis en œuvre sur une plateforme matérielle et logicielle comprenant au moins une antenne de réception, un intercepteur, un moyen de traitement de signal compris ou non dans l'intercepteur.

Selon une autre particularité, le procédé de post-traitement des signaux radars est utilisable sur toute plateforme matérielle (hardware) et logicielle sans nécessiter une modification de ladite plateforme matérielle.

Un autre but de la présente invention est de proposer une infrastructure matérielle et logicielle permettant de traiter des informations contenues dans les signaux radars et en particulier les signaux émis par des radars à faible puissance d'émission.

Ce but est atteint par un système de détection de signaux radars à faible puissance d'émission, en particulier pour des radars de type LPI (Low Probability of Interception), comprenant un dispositif intercepteur, un circuit de traitement des signaux interceptés, ledit circuit de traitement exécutant un programme pour mettre en œuvre les étapes du procédé de post-traitement.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels :
- la figure 1A représente le schéma fonctionnel du procédé de post-traitement de signaux radars à faible puissance d'émission ;
- la figure 1B représente le schéma fonctionnel de la troisième étape du procédé de post-traitement de signaux radars à faible puissance d'émission ;
- la figure 2A représente le schéma fonctionnel du procédé d'émission-réception d'un signal émis par un radar classique à forte puissance d'émission et capté par un intercepteur ;
- la figure 2B représente le schéma fonctionnel du procédé d'émission-réception d'un signal émis par un radar de type LPI, à faible puissance d'émission, et capté par un intercepteur;

### DESCRIPTION DES MODES DE REALISATION PREFERES DE L'INVENTION

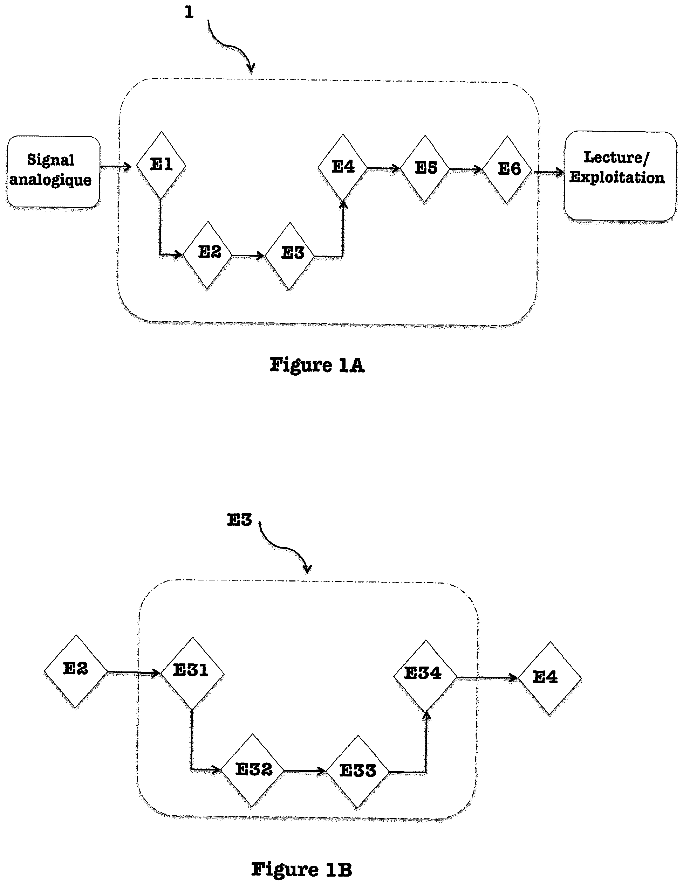

La présente invention concerne un procédé de post-traitement de signaux radars à faible puissance d'émission (1, figure 1A), en particulier pour des radars de type LPI (Low Probability of Interception).

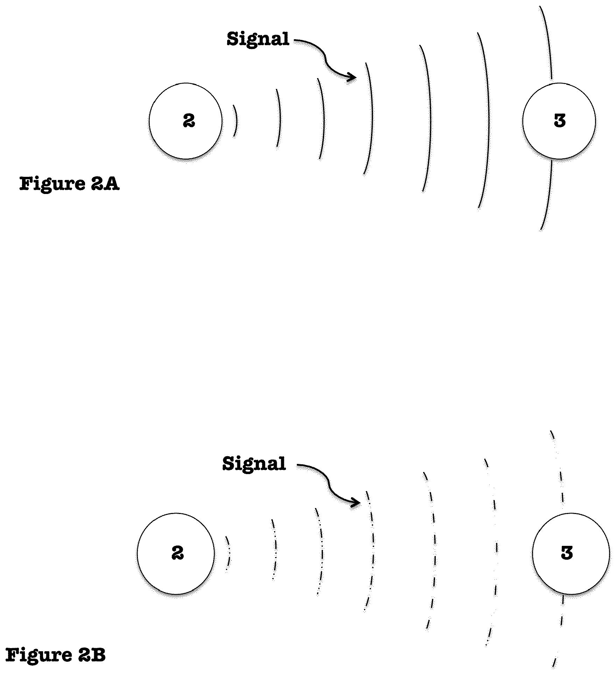

Dans certains modes de réalisation, le procédé (1) [1, figure 1A] de post-traitement de signaux radars à faible puissance d'émission (figure 2B), en particulier pour des radars (2) de type LPI (Low Probability of Interception), comprend:
- une première étape (E1) de numérisation du signal analogique émis par le radar (2) et enregistré par un dispositif intercepteur (3);
- une seconde étape (E2) de génération de spectres et d'au moins une image, à partir du signal numérisé obtenu dans la première étape (E1), via un traitement FFT (Fast Fourier Transform) se focalisant sur les signaux de faible puissance et à l'enregistrement des spectres dans une image représentant sur trois axes, la fréquence sur l'axe des ordonnées, le temps sur l'axe des abscisses et la puissance du signal reçu ;
- une troisième étape (E3) [figure 1A, figure 1B] de traitement de l'image obtenue dans la seconde étape (E2), de génération de spectre et d'image;
- une quatrième étape (E4) de mesure de segments de l'image issue de l'étape (E3) de traitement d'image, à partir du nombre de pixels blancs contigus selon l'axe des abscisses;
- une cinquième étape (E5) de suppression des segments, à faible densité de pixels, obtenus dans la quatrième étape de mesure, les segments à forte densité de pixels étant qualifiés de détections par comparaison à une durée minimale déterminée et mémorisée;
- et une sixième étape (E6) de conversion en mégahertz et milliseconde de la détection du signal pixélisée par une déviation en fréquence selon l'axe des ordonnées et par une durée selon l'axe des abscisses, obtenue dans l'étape (E5) de suppression, pour lecture et interprétation.

Un signal analogique, émis par un radar (2), est réceptionné par un intercepteur (3) et enregistré (figure 2A, figure 2B) pour traitement. Le signal analogique intercepté, qui comporte un ensemble continu d'informations physiques pouvant prendre une infinité de valeurs différentes, est alors transformé en signal numérique (E1, figure 1A), qui comporte un ensemble discret d'informations physiques avec un nombre finies de valeurs. La numérisation du signal s'accompagne d'une perte d'informations et une première vérification du rapport signal à bruit (RSB) du signal numérisé est alors effectuée pour séparer le bruit du signal. Pour un signal émis par un radar classique (2, figure 2A), la puissance d'émission est assez élevée pour que le signal soit facilement différentiable du bruit. Le signal peut alors être traité sans difficulté en se limitant aux données numérisées. Pour un signal avec une amplitude difficilement différentiable du bruit, on est en présence, par exemple d'un radar LPI (Low Probability of Interception), c'est à dire à faible puissance d'émission (2, figure 2B). L'analyse est alors complétée par les étapes successives, (E2), (E3), (E4), (E5) et (E6), définies ci-dessus pour obtenir un signal exploitable. En particulier dans l'étape (E2) une transformation du signal en image permet une première séparation visible du signal d'intérêt, en forme de segments, et du bruit. Plus la puissance du signal d'intérêt est faible, plus la présence du bruit perturbe la bonne détection et caractérisation du signal. Il est alors nécessaire de procéder aux étapes suivantes, à savoir les étapes (E3), (E4), (E5) et (E6).

Dans certains modes de réalisation, la troisième étape (E3) [figure 1A, figure 1B], de traitement de l'image obtenue dans la deuxième étape (E2), comprend, de préférence, au moins une sous-étape (E31) [figure 1B] de détection des contours de l'image issue de l'étape (E2), une sous-étape (E32) de seuillage de l'image traitée dans l'étape (E31) de détection des contours de l'image pour mettre en exergue les segments détectés et réduire le bruit, une sous-étape (E33) de dilatation de l'image traitée dans l'étape (E32) de seuillage pour combler les discontinuités des segments, et une sous-étape (E34) de regroupement des détections obtenues dans l'étape (E33) de dilatation de l'image.

Dans certains modes de réalisation, la sous-étape (E31) de détection des contours de l'image consiste à accentuer les contours du signal en se basant sur le gradient d'intensité lumineuse, et à isoler le signal recherché du bruit. Le contour d'une image se matérialise par une rupture d'intensité dans l'image suivant une direction donnée et représente sa partie la plus informative. La mise en évidence des points représentant les contours dans une image permet ainsi, par exemple, de différencier des zones de l'image ou d'extraire une information réduite pouvant être pertinente pour la caractérisation de l'image. Plusieurs méthodes de filtrage, plus ou moins complexes, par exemple et de manière non limitative les méthodes de Sobel, Roberts ou Scharr, peuvent être mise en œuvre pour détecter les ruptures ou contours dans une image. De préférence, on utilisera un filtre de Prewitt pour la détection des contours de l'image obtenue dans l'étape (E2) de génération de spectres et d'au moins une image. Outre le calcul du gradient ou de la variation de l'intensité dans les deux directions (horizontal et vertical), le filtre de Prewitt effectue également, dans les deux directions, un lissage de l'image permettant ainsi de mieux isoler le signal d'intérêt du bruit. L'image obtenue dans cette étape de détection de contours s'exprime en nuance de gris indiquant l'importance de chaque gradient d'intensité.

Dans certains modes de réalisation, la sous-étape (E32) de seuillage de l'image consiste à passer d'une image en nuance de gris à une image noir et blanc constituée d'information binaire. Dans la sous étape (E32) de seuillage, le passage de l'image en nuance de gris, obtenue dans l'étape de détection de contours, à une image noir et blanc permet de confirmer ou d'infirmer la présence ou non de contours. De préférence, les pixels blancs attestent la présence d'un contour et se voient attribuer la valeur de 1 et, les pixels noirs attestent de l'absence de contours et se voient attribuer la valeur 0. Par pixel, on entend le plus petit élément d'une image auquel on puisse individuellement associer une couleur. Le pixel peut être approximativement rectangulaire ou carré avec une dimension variable. Cette binarisation en chaque point de l'image (attribution du chiffre 1 ou 0 respectivement au pixel blanc et noir ou vice versa) se fait en définissant au préalable un seuil que l'on compare avec le gradient d'intensité en chaque point. Le seuillage est qualifié de global si on utilise un seuil identique pour chaque point de l'image et de local si le seuil concerne une portion de l'image. Néanmoins, le bruit n'est pas constant dans l'image et l'utilisation d'un seuil identique en tout point ne contribue pas à diminuer le bruit. Il est alors adéquat d'utiliser un seuillage adaptatif, avec un seuil s'ajustant selon les parties de l'image. Un point se voit, ainsi, attribuer la valeur 1 si son gradient est supérieur au seuil adaptatif et 0 sinon. Plusieurs méthodes de seuillage adaptatif peuvent être mises en œuvre pour filtrer l'image en nuance de gris en donnant des résultats plus ou moins satisfaisants. De préférence, pour effectuer le seuillage, on utilisera la méthode de Yen, qui présente l'avantage de ne pas faire ressortir le bruit en cas d'absence de signal d'intérêt, afin de ne pas provoquer artificiellement des détections. La méthode de Yen permet également d'obtenir une image binaire présentant moins de bruit.

Dans certains modes de réalisation, la sous-étape (E33) de dilatation de l'image consiste à combler les discontinuités des détections et de remplir l'intérieur des contours du signal d'intérêt par des pixels blancs. L'image obtenue est élargie, les points blancs prennent plus d'importance et les contours sont bien définis, en particulier grâce à la réduction de bruit dans l'étape de seuillage (E32).

Dans certains modes de réalisation, la sous-étape (E34) de regroupement des détections consiste à regrouper par paquets contigus (à une tolérance près) les points blancs correspondant à une potentielle détection. Contrairement aux résidus de bruit qui se matérialisent sur l'image traitée par des points, les signaux recherchés représentent des segments d'une longueur importante.

Dans certains modes de réalisation, les points blancs sont regroupés en segments de différentes tailles.

Dans certains modes de réalisation, l'étape (E4) de mesure des segments de l'image formés de pixels blancs contigus, consiste à sélectionner les segments suivant l'axe des abscisses et correspondant physiquement à une émission d'une onde radar d'une durée supérieure à un seuil, de préférence on utilisera un seuil d'environ 0.5 milliseconde. Les segments correspondant à une émission en dessous de ce seuil sont, alors, considérés comme des bruits et supprimés dans l'étape (E5).

Dans certains modes de réalisation, le procédé (1) de post-traitement des signaux radars est mis en œuvre sur une plateforme matérielle et logicielle comprenant au moins une antenne de réception, un intercepteur, un moyen de traitement de signal compris ou non dans l'intercepteur.

Dans certains modes de réalisation, le procédé de post-traitement des signaux radars est utilisable sur toute plateforme matérielle (hardware) et logicielle, sans nécessiter une modification de ladite plateforme matérielle.

La présente invention concerne également un système pour la détection des signaux radars à faible puissance d'émission.

Dans certains modes de réalisation, le système de détection de signaux radars à faible puissance d'émission, en particulier pour des radars (2) de type LPI (Low Probability of Interception), comprend un dispositif intercepteur (3), un circuit de traitement des signaux interceptés, ledit circuit de traitement exécutant un programme pour mettre en œuvre les étapes procédé (1) de post-traitement.

Passer par un traitement d'image pour effectuer des détections présente plusieurs avantages parmi lesquelles:
- un temps d'exécution réduit par rapport à une méthode consistant à ne travailler que sur les signaux numérisés. En effet les étapes essentielles, en procédant au traitement d'image, sont le transfert des données, le traitement, et éventuellement le stockage. Une image représente un montant d'information de 8 à 200 fois inférieure à celui de données numérisées qui dépend énormément de l'encodage, par exemple: une image au format bitmap (image matricielle) ou image au format jpeg (joint photographic experts group);
- l'ajout unique de ce traitement suffit à détecter les signaux des radars LPI. La plateforme hardware n'a ainsi pas besoin de subir une modification, à condition qu'elle fournisse déjà un flux de données numérisées.
- une détection de signaux d'intérêt dont la puissance est équivalente à celle du bruit, ce qui peut représenter un gain en sensibilité d'environ 20dB.
- une différentiation aisée des signaux perturbateurs (non LPI), en se basant sur le nombre de pixels.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la protection demandée, et l'invention ne doit pas être limitée aux détails donnés ci-dessus.

## Revendications

1. Procédé (1) de post-traitement de signaux radars à faible puissance d'émission, en particulier pour des radars (2) de type LPI (Low Probability of Interception) comprenant :
• une première étape (E1) de numérisation du signal analogique émis par le radar (2) et enregistré par un dispositif intercepteur (3);
• une seconde étape (E2) de génération de spectres et d'au moins une image, à partir du signal numérisé obtenu dans la première étape (E1), via un traitement FFT (Fast Fourier Transform) se focalisant sur les signaux de faible puissance et à l'enregistrement des spectres dans une image représentant sur trois axes, la fréquence sur l'axe des ordonnées, le temps sur l'axe des abscisses et la puissance du signal reçu;
ledit procédé (1) étant **caractérisé en ce qu'**il comprend également:
• une troisième étape (E3) de traitement de l'image obtenue dans la seconde étape (E2), de génération de spectre et d'image, ladite troisième étape (E3) comprenant au moins une sous-étape (E31) de détection des contours de l'image issue de l'étape (E2), une sous-étape (E32) de seuillage de l'image, traitée dans l'étape (E31) de détection des contours de l'image, consistant à passer d'une image en nuance de gris à une image noir et blanc constituée d'information binaire pour mettre en exergue les segments détectés et réduire le bruit, une sous-étape (E33) de dilatation de l'image traitée dans l'étape (E32) de seuillage de l'image, pour combler les discontinuités des segments, et une sous-étape (E34) de regroupement des détections obtenues dans l'étape (E33) de dilatation de l'image.
• une quatrième étape (E4) de mesure de segments de l'image issue de l'étape (E3) de traitement d'image, à partir du nombre de pixels blancs contigus selon l'axe des abscisses;
• une cinquième étape (E5) de suppression des segments, à faible densité de pixels, obtenus dans la quatrième étape de mesure, les segments à forte densité de pixels étant qualifiés de détections par comparaison à une durée minimale déterminée et mémorisée;
• et une sixième étape (E6) de conversion en mégahertz et milliseconde de la détection du signal pixélisée par une déviation en fréquence selon l'axe des ordonnées et par une durée selon l'axe des abscisses, obtenue dans l'étape (E5) de suppression, pour lecture et interprétation.

2. Procédé (1) de post-traitement des signaux radars selon la revendication 1, **caractérisé en ce que** la sous-étape (E31) de détection des contours de l'image consiste à accentuer les contours du signal en se basant sur le gradient d'intensité lumineuse, et à isoler le signal recherché du bruit.

3. Procédé (1) de post-traitement des signaux radars selon la revendication 2, **caractérisé en ce que** l'image est traitée par un filtre de Prewitt.

4. Procédé (1) de post-traitement des signaux radars selon la revendication 1, **caractérisé en ce que** le seuillage est effectué selon la méthode de Yen.

5. Procédé (1) de post-traitement des signaux radars selon la revendication 1, **caractérisé en ce que** la sous-étape (E33) de dilatation de l'image consiste à combler les discontinuités des détections et de remplir l'intérieur des contours du signal d'intérêt par des pixels blancs.

6. Procédé (1) de post-traitement des signaux radars selon la revendication 1, **caractérisé en ce que** la sous-étape (E34) de regroupement des détections consiste à regrouper par paquets contigus (à une tolérance près) les points blancs correspondant à une potentielle détection.

7. Procédé (1) de post-traitement des signaux radars selon la revendication 6, **caractérisé en ce que** les points blancs sont regroupés en segments de différentes tailles.

8. Procédé (1) de post-traitement des signaux radars selon les revendications 1 et 7, **caractérisé en ce que** l'étape (E4) de mesure des segments de l'image formés de pixels blancs contigus, consiste à sélectionner les segments suivant l'axe des abscisses et correspondant physiquement à une émission d'une onde radar d'une durée supérieure à environ 0.5 milliseconde.

9. Procédé (1) de post-traitement des signaux radars selon les revendications précédentes, **caractérisé en ce qu'**il est mis en œuvre sur une plateforme matérielle et logicielle comprenant au moins une antenne de réception, un intercepteur, un moyen de traitement de signal compris ou non dans l'intercepteur.

10. Procédé (1) de post-traitement des signaux radars selon les revendications précédentes, **caractérisé en ce qu'**il est utilisable sur toute plateforme matérielle (hardware) et logicielle, sans nécessiter une modification de ladite plateforme matérielle.

11. Système de détection de signaux radars à faible puissance d'émission, en particulier pour des radars (2) de type LPI (Low Probability of Interception), **caractérisé en ce qu'**il comprend un dispositif intercepteur (3), un circuit de traitement des signaux interceptés, le circuit de traitement exécutant un programme mettant en œuvre les étapes du procédé (1) de post-traitement selon l'une des revendications 1 à 10.

## Patentansprüche

1. Verfahren (1) zur Nachbearbeitung von Radarsignalen niedriger Sendeleistung, insbesondere für Radare (2) des LPI-(Low Probability of Interception)-Typs, das Folgendes beinhaltet:
• einen ersten Schritt (E1) des Digitalisierens des von dem Radar (2) ausgestrahlten und mit einem Abfanggerät (3) aufgezeichneten Analogsignals;
• einen zweiten Schritt (E2) des Erzeugens von Spektren und von wenigstens einem Bild auf der Basis des im ersten Schritt (E1) erhaltenen digitalisierten Signals über eine FFT-(Fast Fourier Transform)-Bearbeitung, die sich auf die Niedrigleistungssignale und auf die Registrierung der Spektren in einem Bild konzentriert, das auf drei Achsen die Frequenz auf der Ordonatenachse, die Zeit auf der Abszissenachse und die Leistung des empfangenen Signals repräsentiert;
wobei das Verfahren (1) **dadurch gekennzeichnet ist, dass** es auch Folgendes beinhaltet:
• einen dritten Schritt (E3) des Verarbeitens des im zweiten Schritt (E2) erhaltenen Bildes, des Erzeugens des Spektrums und des Bildes, wobei der dritte Schritt (E3) wenigstens einen Teilschritt (E31) des Erkennens von Konturen des von Schritt (E2) kommenden Bildes, einen Teilschritt (E32) des Schwellenwertbildens für das Bild, bearbeitet in Schritt (E31) des Erkennens der Konturen des Bildes, bestehend im Überführen eines Graustufenbilds in ein Schwarz-Weiß-Bild, gebildet von binären Informationen zum Hervorheben der erkannten Segmente und zum Reduzieren von Rauschen, einen Teilschritt (E33) des Erweiterns des in Schritt (E32) des Schwellenwertbildens für das Bild verarbeiteten Bildes, zum Schließen der Diskontinuitäten von Segmenten, und einen Teilschritt (E34) des Gruppierens der in Schritt (E33) des Erweiterns des Bildes erhaltenen Detektionen besteht;
• einen vierten Schritt (E4) des Messens von Segmenten des von Schritt (E3) der Bearbeitung des Bildes kommenden Bildes, von der Anzahl von zusammenhängenden weißen Pixeln entlang der Abszissenachse;
• einen fünften Schritt (E5) des Unterdrückens von Segmenten mit geringer Pixeldichte, erhalten im vierten Messschritt, wobei die Segmente mit hoher Pixeldichte von Detektionen durch Vergleich mit einer bestimmten gespeicherten Mindestdauer qualifiziert werden;
• und einen sechsten Schritt (E6) des Umwandelns der Detektion des pixelierten Signals in Megahertz und Millisekunden durch eine Frequenzabweichung entlang der Ordonatenachse und durch eine Dauer in der Abszissenachse, erhalten in Unterdrückungsschritt (E5), zum Lesen und Interpretieren.

2. Verfahren (1) zur Nachbearbeitung von Radarsignalen nach Anspruch 1, **dadurch gekennzeichnet, dass** der Teilschritt (E31) des Detektierens von Konturen des Bildes im Akzentuieren der Konturen des Bildes auf der Basis des Lichtintensitätsgradienten und zum Isolieren des gewünschten Signals von Rauschen besteht.

3. Verfahren (1) zur Nachbearbeitung von Radarsignalen nach Anspruch 2, **dadurch gekennzeichnet, dass** das Bild durch ein Prewitt-Filter bearbeitet wird.

4. Verfahren (1) zur Nachbearbeitung von Radarsignalen nach Anspruch 1, **dadurch gekennzeichnet, dass** die Schwellenwertbildung mit der Yen-Methode erfolgt.

5. Verfahren (1) zur Nachbearbeitung von Radarsignalen nach Anspruch 1, **dadurch gekennzeichnet, dass** der Teilschritt (E33) des Erweiterns des Bildes im Schließen der Diskontinuitäten von Detektionen und im Ausfüllen des Innern der Konturen des Signals von Interesse mit weißen Pixeln besteht.

6. Verfahren (1) zur Nachbearbeitung von Radarsignalen nach Anspruch 1, **dadurch gekennzeichnet, dass** der Teilschritt (E34) des Gruppierens der Detektionen im Gruppieren der weißen Punkte entsprechend einer Punktdetektion durch zusammenhängende Pakete (mit einer engen Toleranz) besteht.

7. Verfahren (1) zur Nachbearbeitung von Radarsignalen nach Anspruch 6, **dadurch gekennzeichnet, dass** die weißen Punkte in Segmente unterschiedlicher Größen gruppiert werden.

8. Verfahren (1) zur Nachbearbeitung von Radarsignalen nach den Ansprüchen 1 und 7, **dadurch gekennzeichnet, dass** der Schritt (E4) des Messens der Segmente des von zusammenhängenden weißen Pixeln gebildeten Bildes im Wählen der Segmente gemäß der Abszissenachse und in physischer Entsprechung einer Emission einer Radarwelle einer Dauer von mehr als etwa 0,5 Millisekunden besteht.

9. Verfahren (1) zur Nachbearbeitung von Radarsignalen nach den vorherigen Ansprüchen, **dadurch gekennzeichnet, dass** es auf einer Hardware- und Software-Plattform durchgeführt wird, die wenigstens eine Empfangsantenne, einen Abfänger, ein in dem Abfänger enthaltenes oder nicht enthaltenes Signalverarbeitungsmittel umfasst.

10. Verfahren (1) zur Nachbearbeitung von Radarsignalen nach den vorherigen Ansprüchen, **dadurch gekennzeichnet, dass** es auf jeder Hardware- und Software-Plattform benutzt werden kann, ohne eine Modifikation der Hardware-Plattform zu benötigen.

11. System zum Erkennen von Radarsignalen niedriger Sendeleistung, insbesondere für Radare (2) des LPI-(Low Probability of Interception)-Typs, **dadurch gekennzeichnet, dass** es ein Abfanggerät (3), eine Schaltung zum Verarbeiten von abgefangenen Signalen umfasst, wobei die Bearbeitungsschaltung ein Programm ausführt, das die Schritte des Verfahrens (1) zur Nachbearbeitung nach einem der Ansprüche 1 bis 10 durchführt.

## Claims

1. Method (1) for post-processing radar signals with low emission power, in particular for radar (2) of the LPI type (Low Probability of Interception), comprising:
- a first step (E1) of digitalisation of the analogue signal emitted by the radar (2) and recorded by an interceptor device (3);
- a second step (E2) of generating spectra and at least one image, from the digitalised signal obtained in the first step (E1), via FFT processing (Fast Fourier Transform) focusing on low-power signals and recording of the spectra in an image representing on three axes, the frequency on the axis of ordinates, the time on the axis of abscissae and the power of the signal received;
said method (1) being **characterised in that** it also comprises:
- a third step (E3) of processing the image obtained in the second step (E2), of generating a spectrum and image, said third step (E3) comprising at least one substep (E31) of detecting the contours of the image arising from step (E2), a substep (E32) of thresholding the image processed in the image contour detection step (E31), consisting of changing from an image in a shade of grey to a black-and-white image consisting of binary information for highlighting the detected segments and reducing the noise, a substep (E33) of dilating the image processed in the image thresholding step (E32), in order to bridge the gaps in the segments, and a substep (E34) of regrouping the detections obtained in the image dilation step (E33);
- a fourth step (E4) of measurement of segments of the image arising from the image processing step (E3), from the number of contiguous white pixels along the axis of abscissae;
- a fifth step (E5) of deletion of segments, with a low density of pixels, obtained in the fourth step of measurement, the segments with a high density of pixels being classed as detections in comparison with a given, stored minimum length of time;
- and a sixth step (E6) of conversion to megahertz and milliseconds of detection of the pixelated signal by a deviation in frequency along the axis of ordinates and by a length of time along the axis of abscissae, obtained in the deletion step (E5), for reading and interpretation.

2. Method (1) for post-processing radar signals according to claim 1, **characterised in that** the image contour detection substep (E31) consists of accentuating the contours of the signal on the basis of the gradient of light intensity, and isolating the desired signal from the noise.

3. Method (1) for post-processing radar signals according to claim 2, **characterised in that** the image is processed by a Prewitt filter.

4. Method (1) for post-processing radar signals according to claim 1, **characterised in that** thresholding is carried out by the Yen method.

5. Method (1) for post-processing radar signals according to claim 1, **characterised in that** the image dilation substep (E33) consists of bridging the gaps in the detections and filling the interior of the contours of the signal of interest with white pixels.

6. Method (1) for post-processing radar signals according to claim 1, **characterised in that** the detection regrouping substep (E34) consists of regrouping in contiguous packets (to an exact tolerance) the white dots corresponding to a potential detection.

7. Method (1) for post-processing radar signals according to claim 6, **characterised in that** the white dots are regrouped in segments of different sizes.

8. Method (1) for post-processing radar signals according to claims 1 and 7, **characterised in that** the step (E4) of measurement of the image segments formed by contiguous white pixels consists of selecting the segments along the axis of abscissae and physically corresponding to an emission of a radar wave having a length greater than approximately 0.5 millisecond.

9. Method (1) for post-processing radar signals according to the preceding claims, **characterised in that** it is carried out on a hardware and software platform comprising at least one receiving antenna, an interceptor and a means of signal processing which may or may not be included in the interceptor.

10. Method (1) for post-processing radar signals according to the preceding claims, **characterised in that** it can be used on any hardware and software platform, without needing a modification of said hardware platform.

11. System for detecting radar signals with low emission power, in particular for radar (2) of the LPI type (Low Probability of Interception), **characterised in that** it comprises an interceptor device (3), a circuit for processing the intercepted signals, the processing circuit executing a program which carries out the steps of the post-processing method (1) according to one of claims 1 to 10.
